**Europäisches Patentamt**

**European Patent Office**

**Office européen des brevets**

(19)

(11) Numéro de publication : **0 227 707**
**B1**

(12) **FASCICULE DE BREVET EUROPÉEN**

(45) Date de publication du fascicule du brevet :
**05.04.89**

(21) Numéro de dépôt : **86903195.5**

(22) Date de dépôt : **16.06.86**

(86) Numéro de dépôt international :
**PCT/CH 86/00088**

(87) Numéro de publication internationale :
**WO/8607562 (31.12.86 Gazette 86/28)**

(51) Int. Cl.⁴ : **B 29 C 47/02**, B 29 C 47/28,
B 29 C 47/94, H 01 B 13/14

(54) TETE D'EXTRUSION A FILIERE ROTATIVE ET PROCEDE DE LUBRIFICATION DE CETTE TETE.

(30) Priorité : **17.06.85 FR 8509290**

(43) Date de publication de la demande :
**08.07.87 Bulletin 87/28**

(45) Mention de la délivrance du brevet :
**05.04.89 Bulletin 89/14**

(84) Etats contractants désignés :
**AT CH DE FR GB IT LI SE**

(56) Documents cités :
**CH--A-- 258 422**
**DE--C-- 712 108**
**FR--A-- 2 559 613**
**US--A-- 2 779 970**
**US--A-- 3 059 277**
**US--A-- 3 613 162**

(73) Titulaire : **SWISSCAB E.A. SCHÖN S.A.**
**Chemin des Cerisiers**
**CH-1462 Yvonand (CH)**

(72) Inventeur : **BLOCH, Peter**
**Au Village**
**CH-1351 Montcherand (CH)**
Inventeur : **ASTE, Robert**
**Rue du Valentin 68**
**CH-1400 Yverdon (CH)**

(74) Mandataire : **Nithardt, Roland**
**CABINET ROLAND NITHARDT Attn: Cabinet MOSER**
**& CIE Rue Edouard Verdan 15**
**CH-1400 Yverdon-les-Bains (CH)**

Jouve, 18, rue St-Denis, 75001 Paris, France

## Description

La présente invention concerne une tête d'extrusion pour la fabrication d'un élément hélicoïdal en matière synthétique, comportant une filière rotative pourvue d'un orifice axial dont la forme correspond au profil transversal de l'élément à fabriquer, un poinçon aligné avec la filière, une douille intermédiaire rotative, qui est couplée à un dispositif d'entraînement en rotation et à l'intérieur de laquelle la filière et le poinçon sont fixés de manière centrée, cette douille étant pourvue de conduits de passage de la matière synthétique et une cartouche de distribution montée d'une manière stationnaire et pourvue d'un alésage axial, dans lequel est logée la douille intermédiaire, et de conduits de distribution pour répartir la matière synthétique sur le pourtour de cette douille.

Selon un autre aspect, l'invention concerne aussi une tête d'extrusion pour la fabrication d'un élément en matière synthétique d'une première couleur présentant au moins une bande hélicoïdale en matière synthétique d'une seconde couleur, cette tête comportant une filière rotative pourvue d'un orifice axial, dont la forme correspond au profil transversal de l'élément, un poinçon aligné avec la filière, une douille intermédiaire rotative, qui est couplée à un dispositif d'entraînement en rotation et à l'intérieur de laquelle la filière et le poinçon sont fixés de manière centrée, cette douille étant pourvue de conduits de passage de la matière synthétique et une cartouche de distribution montée de manière stationnaire et pourvue d'un alésage axial, dans lequel est logée la douille intermédiaire, et de conduits de distribution pour répartir la matière synthétique sur le pourtour de cette douille.

L'invention concerne également un procédé de lubrification d'une tête d'extrusion à filière rotative selon le préambule de la revendication 8.

On utilise des têtes d'extrusion à filière rotative pour produire des éléments dont la surface extérieure présente une forme hélicoïdale, notamment des gaines formées sur le conducteur central d'un câble coaxial et pourvues d'une joue hélicoïdale servant au centrage de ce conducteur par rapport au conducteur extérieur, ou des joncs cylindriques à rainures hélicoïdales servant de support à des fibres optiques, dans un câble optique. Les têtes d'extrusion à filière rotative qui sont connues actuellement présentent plusieurs problèmes qui ne peuvent être résolus que par des moyens compliqués et coûteux. Comme la matière synthétique fournie sous pression par l'extrudeuse parvient à la filière par un conduit conique délimité d'un côté par un poinçon fixe, et de l'autre par la filière rotative, la filière subit une poussée axiale très importante, qui doit être reprise par un palier de butée à billes ou à rouleaux, lequel est coûteux et encombrant. La demande de brevet européen publiée sous le No. 0 078 213 illustre un exemple d'une telle disposition.

D'autre part, il est difficile d'obtenir une étanchéité convenable entre la filière rotative et son support fixe dans la tête d'extrusion, de manière à éviter que des fuites de matières synthétiques encrassent le ou les paliers à billes. En général, il est nécessaire de prévoir des joints à labyrinthe, qui sont coûteux et délicats.

Enfin, la présence de ces joints et des paliers à billes ou à rouleaux rend plus difficile le chauffage de la filière, en particulier la transmission de chaleur par conduction.

Pour le revêtement d'un fil au moyen de deux matières isolantes de différentes couleurs formant des bandes hélicoïdales, le brevet CH-A-258422 prévoit un guide-fil rotatif sur lequel est vissée la filière et qui renferme des conduits de distribution des matières synthétiques à partir de deux gorges annulaires ménagées sur sa surface périphérique. Le guide-fil tourne dans un alésage axial d'une cartouche de distribution qui est fixe. Ce système ne permet absolument pas un centrage précis de la filière par rapport au guide-fil. En outre, la construction du guide-fil, avec les conduits de distribution et les organes d'entraînement qu'il comporte est extrêmement compliquée et délicate. Enfin, rien n'est prévu pour résoudre les problèmes d'étanchéité entre le poinçon et la cartouche de distribution.

Le brevet US-A-2 779 970 propose aussi une tête pour l'extrusion d'un élément bicolore ayant des bandes hélicoïdales. La construction décrite dans ce document est du type indiqué en préambule. La surface de glissement et d'appui de la douille intermédiaire rotative contre la cartouche fixe de distribution est conique, la douille étant poussée axialement contre la cartouche au moyen d'un ressort qui prend appui contre le mécanisme d'entraînement en rotation de la douille. En plus des efforts axiaux exercés sur le corps de la tête et sur le mécanisme d'entraînement à cause de la poussée du ressort, cette construction est défavorable au point de vue de l'étanchéité le long de la surface de glissement car la pression de la matière au niveau de cette surface conique doit être équilibrée par la poussée du ressort. Or cette pression peut être très élevée (jusqu'à 700 bars et plus) et elle peut varier sensiblement au cours d'une fabrication donnée.

Par conséquent, la présente invention a pour but de fournir une tête d'extrusion à filière rotative qui soit de construction simple et peu encombrante et qui permette de remédier dans une mesure substantielle aux inconvénients susmentionnés, et en particulier d'éviter l'utilisation de paliers à billes ou à rouleaux, tout en permettant d'obtenir une lubrification appropriée des pièces rotatives.

Dans ce but, l'invention concerne une tête d'extrusion du premier type mentionné en préambule, caractérisée en ce que la douille intermédiaire comporte une surface extérieure cylindrique agencée pour tourner en glissant à l'intérieur de l'alésage axial cylindrique de la cartouche de distribution, un épaulement périphérique agencé pour s'appliquer contre une extrémité de cette cartouche, et un écrou de serrage pour exercer une poussée réglable contre l'autre extrémité de ladite cartouche.

De préférence, la douille intermédiaire comporte, en regard des conduits de distribution de la cartouche, une gorge périphérique qui communique avec l'intérieur de la douille par des conduits de passage de la matière synthétique. Ces conduits de passage sont séparés les uns des autres par des entretoises dont les faces situées en regard du poinçon forment, en profil transversal, des angles aigus avec la surface périphérique du poinçon, et le poinçon comporte une gorge périphérique en regard desdits conduits de passage.

Selon une forme de réalisation avantageuse, le dispositif d'entraînement en rotation est disposé en regard de l'extrémité arrière de la douille intermédiaire, c'est-à-dire du côté opposé à la sortie du produit extrudé, et comporte des goupilles radiales qui sont engagées dans des encoches ménagées dans l'extrémité arrière de ladite douille.

La filière est montée de préférence de manière coulissante dans la douille intermédiaire, dans une position axiale qui est réglable au moyen d'un écrou de butée vissé sur la douille intermédiaire. Cette filière peut comporter une surface extérieure cylindrique, et une goupille d'entraînement en rotation qui est engagée dans une rainure longitudinale correspondante de la douille intermédiaire.

Selon une forme de réalisation particulière, le poinçon comporte une surface extérieure cylindrique de centrage dans la douille intermédiaire, et un épaulement circulaire de butée, un écrou de blocage arrière étant monté dans la douille intermédiaire dans le prolongement de l'extrémité du poinçon qui est opposée à la filière, de manière à bloquer le poinçon axialement et en rotation par serrage de cet épaulement.

Grâce à l'utilisation d'une douille intermédiaire comportant une surface périphérique essentiellement cylindrique et à la répartition de la matière synthétique sous pression tout autour de cette douille, la résultante des forces s'exerçant sur la douille intermédiaire ne présente pas de composante axiale ou radiale importante, ce qui permet d'éviter aussi bien l'utilisation de paliers à billes ou à rouleaux que la nécessité d'une butée axiale subissant une poussée importante. Ainsi, la douille peut simplement tourner en glissant à l'intérieur de l'alésage central de la cartouche.

Selon un autre aspect, la présente invention concerne aussi une tête d'extrusion du deuxième type mentionné en préambule, caractérisée en ce que la douille intermédiaire comporte une surface extérieure cylindrique agencée pour tourner en glissant à l'intérieur de l'alésage axial cylindrique de la cartouche de distribution, un épaulement périphérique agencé pour s'appliquer contre une extrémité de cette cartouche, et un écrou de serrage pour exercer une poussée réglable dans l'autre sens, et en ce que la filière rotative est pourvue d'au moins un conduit transversal d'amenée de la matière de la seconde couleur.

La présente invention a donc également pour objet un procédé de lubrification d'une tête d'extrusion à filière rotative pour l'extrusion d'éléments en matière synthétique thermoplastique, ladite filière étant fixée dans une douille intermédiaire rotative comportant une surface extérieure de révolution pour tourner en glissant dans un alésage axial d'une cartouche de distribution montée de manière stationnaire dans la tête d'extrusion, ladite cartouche étant pourvue de conduits de distribution pour répartir la matière synthétique sous pression sur le pourtour de la douille rotative dans une partie centrale de ladite surface de révolution et pour alimenter ainsi la filière grâce à des conduits ménagés à travers la douille rotative, caractérisé en ce que l'on admet un débit de fuite de la matière thermoplastique le long de ladite surface de révolution utilisée pour lubrifier cette surface, et en ce que l'on règle ce débit de fuite par un serrage axial de deux éléments annulaires montés sur la douille intermédiaire rotative et s'appliquant en glissant contre les extrémités respectives de la cartouche de distribution, le débit de fuite s'échappant entre lesdits éléments annulaires et les extrémités de la cartouche.

Selon une forme de réalisation préférée, l'on réalise ladite surface de révolution suivant une forme cylindrique dont une extrémité comporte un épaulement extérieur s'appliquant contre une extrémité de la cartouche de distribution, sous l'effet du serrage d'un écrou vissé sur la douille intermédiaire rotative et s'appliquant contre l'autre extrémité de ladite cartouche, et l'on règle le débit de fuite par rotation de l'écrou sur la douille.

L'invention sera mieux comprise à l'aide de la description d'un exemple de réalisation préférée, donné ci-dessous en référence au dessin annexé, dans lequel :

La figure 1 est une vue en perspective d'un tronçon d'un jonc à rainures hélicoïdales pour fibres obtiques, fabriqué au moyen d'une tête d'extrusion à filière rotative.

La figure 2 est une vue partielle en coupe axiale d'une tête d'extrusion à filière rotative selon l'invention, et

La figure 3 est une vue en coupe transversale suivant la ligne III-III de la figure 2.

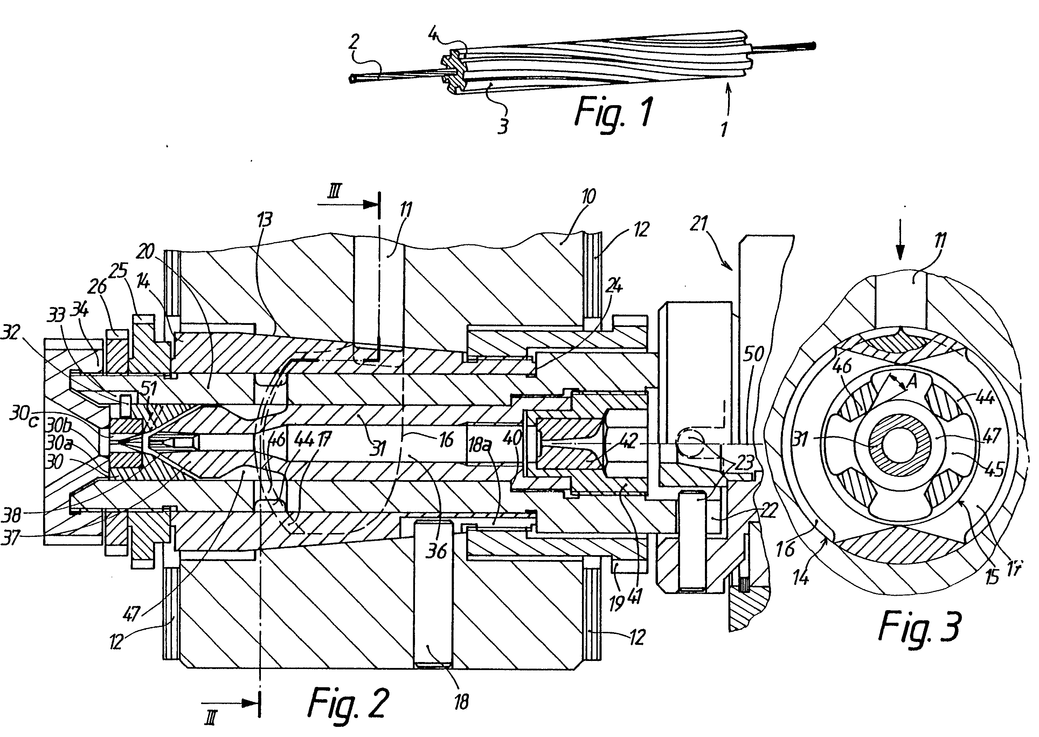

En référence à la figure 1, l'élément à fabriquer dans l'exemple décrit ci-dessous est un jonc rainuré 1 pour fibres optiques comprenant un élément central de traction constitué par un petit câble métallique 2, et une gaine 3 en matière synthétique thermoplastique qui est extrudée sur le câble 2 et qui présente une forme générale cylindrique. Une série de rainures hélicoïdales 4 est formée sur la surface extérieure de la gaine 3, au moment de son extrusion. Ces rainures sont destinées à recevoir chacune une ou plusieurs fibres optiques et elles peuvent présenter un profil de forme quelconque, appropriée à leur fonction. Les joncs rainurés de ce type sont fabriqués couramment au moyen des têtes d'extrusion connues à filière rotative.

En référence aux figures 2 et 3, la tête d'extrusion selon l'invention comporte un corps métallique 10 de conception connue, du type utilisé dans les têtes d'extrusion à filière non rotative. Le corps 10 est pourvu d'un conduit d'amenée 11 de la matière synthétique chauffée, délivrée sous pression par une extrudeuse, et un dispositif de chauffage qui est constitué ici de manière connue par des corps de chauffe électriques appliqués contre les faces extérieures du corps 10. Le conduit d'amenée 11 débouche latéralement dans un alésage conique 13 dans lequel est fixée une cartouche de distribution 14 pourvue d'un alésage axial cylindrique 15. Cette cartouche est munie de deux conduits de distribution 16 en deux lobes qui s'étendent symétriquement de part et d'autre de la cartouche à partir du conduit d'amenée 11 et qui traversent la cartouche pour déboucher dans son alésage axial par des fentes 17 s'étendant chacune sur 180° sur tout le pourtour de l'alésage 15. Un doigt 18 monté dans le corps 10 et engagé dans une rainure axiale 18a de la cartouche 14 empêche toute rotation de cette cartouche, qui est retenue axialement par un écrou 19.

Une douille intermédiaire tubulaire 20, présentant sur une grande partie de sa longueur une surface extérieure cylindrique, est insérée dans l'alésage axial 15 de la cartouche de distribution 14. Son diamètre extérieur est inférieur de quelques centièmes de millimètres à celui de l'alésage 15, de sorte qu'elle peut tourner en glissant dans cet alésage. A cet effet, la douille intermédiaire 20 est entraînée en rotation par un dispositif d'entraînement 21 accouplé à la partie arrière de la douille, c'est-à-dire sa partie de droite sur la figure 2. Afin de permettre un jeu axial, radial ou angulaire, le mécanisme d'accouplement comprend quatre encoches longitudinales 22, disposées symétriquement dans l'extrémité arrière de la douille 20, et quatre goupilles radiales 23 fixées sur le dispositif d'entraînement 21 et engagées respectivement dans les encoches 22. On peut facilement dégager les goupilles 23 des encoches 22 par un recul axial du dispositif 21.

Pour être positionnée axialement par rapport à la cartouche 14, la douille intermédiaire 20 comporte sur sa partie arrière un épaulement périphérique circulaire 24 agencé pour buter contre l'extrémité arrière de la cartouche 14, et un écrou de serrage 25 qui, lorsqu'on le serre, s'applique contre l'autre extrémité de la cartouche 14. Un contre-écrou 26 est prévu pour bloquer l'écrou 25. De cette manière, on peut ajuster la force de serrage axial de la cartouche 14 sur la douille intermédiaire 20.

La douille intermédiaire 20 est pourvue d'un alésage axial de forme générale cylindrique, à l'intérieur duquel sont montés dans l'alignement l'un de l'autre une filière 30 et un guide-câble 31 qui sont tous deux rotatifs avec la douille 20.

L'alésage axial de la douille 20 assure un centrage fixe de la filière et du guide-câble. Dans le cas présent, la filière 30 est constituée de deux éléments fixés ensemble, à savoir un corps extérieur 30a en acier inoxydable et une bague 30b présentant une grande résistance à l'usure, par exemple réalisée en un carbure métallique. La filière 30 présente une surface intérieure dont la forme est connue et comprend une partie conique sur le corps 30a et un orifice axial 30c dans la bague 30b. L'orifice 30c est pourvu d'une série de nervure hélicoïdales destinées à façonner les rainures 4 de l'élément I fabriqué. Pour être entraînée en rotation avec la douille intermédiaire 20, la filière 30 est munie d'une goupille radiale 32 qui est engagée dans une rainure longitudinale 33 de la douille. La filière est maintenue axialement par appui contre un écrou de butée 34, vissé sur l'extrémité avant de la douille 20. Cet écrou transmet à la douille la poussée axiale résultant de la pression de la matière synthétique sur la filière 30. Il permet également d'ajuster la position axiale de la filière, pour optimiser l'écoulement de la matière synthétique.

Le guide-câble 31 a une forme générale tubulaire, avec un conduit axial 36 pour le passage du câble 2. Dans la partie avant 37 du guide-câble, ce conduit renferme une bague 38 de support du câble, réalisée en un matériau présentant une grande résistance à l'usure. La partie 37 du guide-câble a une force générale conique et elle sert de poinçon à l'intérieur de l'évidement conique de la filière 30. A son extrémité arrière, le guide-câble 31 est pourvu d'un épaulement périphérique 40 qui bute contre un épaulement correspondant de la douille intermédiaire 20. Un écrou de blocage arrière 41 est vissé dans la douille 20 pour bloquer le guide-câble dans la douille par appui de ces deux épaulements. L'écrou 41 est évidé axialement et il renferme aussi une bague 42 de support du câble.

Pour livrer passage à la matière synthétique sortant des fentes 17 des conduits de distribution, la douille intermédiaire 20 est pourvue d'une gorge périphérique 44 et de quatre conduits de passage 45 disposés symétriquement dans un plan radial et séparés par des entretoises 46. En face de ces conduits, le guide-câble 31 comporte également une gorge périphérique 47, d'où la matière synthétique peut s'écouler autour du poinçon 37 jusqu'à la filière.

On a constaté que, pour assurer un écoulement optimal et sans à-coups de la matière synthétique à travers les conduits de passage 45, il est avantageux de donner aux entretoises 46 un profil en biseau, selon la vue en coupe transversale de la figure 3, de manière que leurs faces forment, avec la surface périphérique du poinçon, des angles aigus A qui peuvent être compris de préférence entre 10° et 45°.

Au cours de l'extrusion, le câble 2 défile le long de l'axe de rotation 50 à travers le dispositif d'entraînement 21, le guide-câble 31 et la filière 30, à une vitesse qui correspond à la vitesse d'extrusion de la matière synthétique dans la filière. La matière synthétique délivrée sous pression par l'extrudeuse est répartie tout autour du poinçon 37 par les conduits décrits ci-dessus et elle s'écoule à travers l'orifice axial 30c de la filière rotative, qui la façonne de manière hélicoïdale. Comme tous les éléments de la tête d'extrusion sont métalliques, la chaleur délivrée par les corps de chauffe 12 se répartit par conduction dans toute la tête, ce qui maintient la matière synthétique à une température appropriée jusqu'à la filière.

Le problème de l'étanchéité entre les parties fixes et les parties en rotation consiste simplement à empêcher une fuite trop importante de matière synthétique le long des surfaces de contact mutuelles de la cartouche de distribution 14 et de la douille intermédiaire 20. En fait, on admet l'existence d'un petit débit de fuite de matière synthétique le long de ces surfaces en glissement, ce qui assure de manière avantageuse leur lubrification. On règle ce débit de fuite en ajustant le serrage de la douille intermédiaire 20 sur la cartouche 14 au moyen de l'écrou de serrage 25, de telle manière que la matière synthétique, maintenue à température élevée par le chauffage, suinte lentement aux deux extrémités de la cartouche 14. On bloque ensuite l'écrou 25 par son contre-écrou 26. En fait, le débit de fuite peut être très faible, limité à quelques grammes par heure.

On remarque que, du fait que la filière 30 et le guide-câble 31 sont fixés tous deux à l'intérieur de la douille 20, les poussées axiales exercées sur eux par la matière synthétique sont absorbées par la douille 20 par l'intermédiaire synthétique sont absorbées par la douille 20 par l'intermédiaire des écrous 34 et 41 et qu'il n'y a donc pas de résultante axiale notable sur les surfaces extérieures de glissement de la douille.

On remarque que la tête d'extrusion décrite ci-dessus présente une construction très simple et un fonctionnement sûr. La plupart des pièces sont semblables à celles des têtes à filière fixe. La douille intermédiaire présente essentiellement des surfaces cylindriques, faciles à usiner. En outre, le démontage de la tête pour son nettoyage ou pour un échange de la filière et du guide-câble ne présente pas de difficultés. Comme il n'y a pas de paliers à billes ou à rouleaux, la transmission de la chaleur s'effectue facilement par conduction et il n'est donc pas nécessaire de prévoir des organes de chauffage à proximité de la filière. En outre, on évite ainsi tout encrassement des paliers.

La présente invention n'est pas limitée à la forme de réalisation décrite ci-dessus à titre d'exemple. En particulier, elle permet la réalisation de têtes d'extrusion à filière rotative agencées pour produire toute sorte d'éléments en matière synthétique présentant un profil hélicoïdal sur leur surface extérieure ou sur une surface intérieure au moyen d'un poinçon qui s'étend à travers l'orifice axial de la filière et qui comporte lui-même des nervures. Bien entendu, le pas de l'hélice peut être réglé en ajustant la vitesse de rotation par rapport à la vitesse axiale de l'extrusion. En utilisant une filière pourvue de nervures droites et courtes et en changeant alternativement le sens de rotation par le dispositif d'entraînement 21, on peut fabriquer un jonc pour fibres optiques qui est analogue à celui de la figure 1, mais présente un pas hélicoïdal alternatif dont le sens change régulièrement, par exemple après 270° de rotation dans chaque sens. De tels joncs permettent une compensation des tensions dans les fibres au moment de leur pose sur le jonc.

La présente invention est aussi applicable dans une tête d'extrusion d'un élément bicolore tel qu'une gaine isolante pour conducteur électrique présentant une ou plusieurs bandes de matière synthétique d'une seconde couleur sur une matière de première couleur. Dans ce cas, la tête d'extrusion est complétée par une seconde alimentation provenant d'une extrudeuse auxiliaire, de la manière connue notamment par le EP-A-0078213 mentionné plus haut. La filière rotative utilisée comporte alors un conduit supplémentaire 51 représenté schématiquement en traits interrompus sur la figure 2, ce conduit étant alimenté à travers la cartouche de distribution 14 et la douille intermédiaire 20 par des conduits de distribution similaires aux conduits 16, 17, 44 et 45 utilisés pour la première·couleur.

## Revendications

1. Tête d'extrusion pour la fabrication d'un élément hélicoïdal (1) en matière synthétique, comportant une filière rotative (30) pourvue d'un orifice axial dont la forme correspond au profil transversal de l'élément à fabriquer, un poinçon (31 et 37) aligné avec la filière, une douille intermédiaire rotative (20), qui est couplée à un dispositif d'entraînement en rotation et à l'intérieur de laquelle la filière et le poinçon sont fixés de manière centrée, cette douille étant pourvue de conduits (45) de passage de la matière synthétique, et une cartouche de distribution (14) montée de manière stationnaire et pourvue d'un alésage axial (15), dans lequel est logée la douille intermédiaire, et de conduits de distribution (16, 17) pour répartir la matière synthétique sur le pourtour de cette douille, caractérisée en ce que la douille intermédiaire (20) comporte une surface extérieure cylindrique agencée pour tourner en glissant à l'intérieur de l'alésage axial cylindrique (15) de la cartouche de distribution (14), un épaulement périphérique (24) agencé pour s'appliquer contre une extrémité de cette cartouche, et un écrou de serrage (25) pour exercer une poussée réglable contre l'autre extrémité de ladite cartouche.

2. Tête d'extrusion selon la revendication 1, caractérisée en ce que les conduits de distribution de ladite cartouche comportent deux lobes symétriques (16, 17) s'étendant chacun sur 180° autour de la douille intermédiaire, en ce que cette douille intermédiaire (20) comporte, en regard des conduits de distribution (16, 17) de la cartouche, une gorge périphérique (44) qui communique avec l'intérieur de la douille par des conduits de passage de la matière synthétique (45), en ce que lesdits conduits de passage (45) sont séparés les uns des autres par des entretoises (46) dont les faces situées en regard du poinçon (31, 37) forment, en profil transversal, des angles aigus (A) avec la surface périphérique du poinçon, et en ce que le poinçon comporte une gorge périphérique (47) en regard desdits conduits de passage.

3. Tête d'extrusion selon la revendication 1, caractérisée en ce que le dispositif d'entraînement en rotation (21) est disposé en regard de l'extrémité arrière de la douille intermédiaire (20), c'est-à-dire du côté opposé à la sortie du produit extrudé, et comporte des goupilles radiales (23) qui sont engagées dans des encoches (22) ménagées dans l'extrémité arrière de ladite douille.

4. Tête d'extrusion selon la revendication 1, caractérisée en ce que la filière (30) est montée de manière coulissante dans la douille intermédiaire (20), dans une position axiale qui est réglable au moyen d'un écrou de butée (34) vissé sur la douille intermédiaire.

5. Tête d'extrusion selon la revendication 4, caractérisée en ce que la filière (30) comporte une surface extérieure cylindrique, et une goupille (32) d'entraînement en rotation, qui est engagée dans une rainure longitudinale correspondante (33) de la douille intermédiaire.

6. Tête d'extrusion selon la revendication 1, caractérisée en ce que le poinçon (31 et 37) comporte une surface extérieure cylindrique de centrage dans la douille intermédiaire (20) et un épaulement circulaire de butée (40), coopérant avec un épaulement correspondant de la douille intermédiaire et en ce qu'un écrou de blocage arrière (41) est monté dans la douille intermédiaire, dans le prolongement de l'extrémité du poinçon qui est opposée à la filière, de manière à bloquer le poinçon axialement et en rotation par serrage de cet épaulement.

7. Tête d'extrusion pour la fabrication d'un élément en matière synthétique d'une première couleur présentant au moins une bande hélicoïdale en matière synthétique d'une seconde couleur, cette tête comportant une filière rotative (30) pourvue d'un orifice axial dont la forme correspond au profil transversal de l'élément, un poinçon (31 et 37) aligné avec la filière, une douille intermédiaire rotative (20), qui est couplée à un dispositif d'entraînement en rotation et à l'intérieur de laquelle la filière et le poinçon sont fixés de manière centrée, cette douille étant pourvue de conduits (45) de passage de la matière synthétique, et une cartouche de distribution (14) montée de manière stationnaire et pourvue d'un alésage axial (15), dans lequel est logée la douille intermédiaire, et de conduits de distribution respectifs (16, 17) pour répartir la première et la seconde matière synthétique sur le pourtour de cette douille, caractérisée en ce que la douille intermédiaire (20) comporte une surface extérieure cylindrique agencée pour tourner en glissant à l'intérieur de l'alésage axial cylindrique (15) de la cartouche de distribution (14), un épaulement périphérique (24) agencé pour s'appliquer contre une extrémité de cette cartouche, et un écrou de serrage (25) pour exercer une poussée réglable dans l'autre sens, et en ce que la filière rotative (30) est pourvue d'au moins un conduit transversal (51) d'amenée de la matière de la seconde couleur.

8. Procédé de lubrification d'une tête d'extrusion à filière rotative pour l'extrusion d'éléments en matière synthétique thermoplastique, ladite filière (30) étant fixée dans une douille intermédiaire rotative (20) comportant une surface extérieure de révolution pour tourner en glissant dans un alésage axial (15) d'une cartouche de distribution (14) montée de manière stationnaire dans la tête d'extrusion, ladite cartouche (14) étant pourvue de conduits de distribution (16, 17) pour répartir la matière synthétique sous pression sur le pourtour de la douille rotative (20) dans une partie centrale de ladite surface de révolution et pour alimenter ainsi la filière (30) grâce à des conduits (45) ménagés à travers la douille rotative, caractérisé en ce que l'on admet un débit de fuite de la matière thermoplastique le long de ladite surface de révolution pour lubrifier cette surface, et en ce que l'on règle ce débit de fuite par un serrage axial de deux éléments annulaires (24, 25) montés sur la douille intermédiaire rotative (20) et s'appliquant en glissant contre les extrémités respectives de la cartouche de distribution (14), le débit de fuite s'échappant entre lesdits éléments annulaires et les extrémités de la cartouche.

9. Procédé selon la revendication 8, caractérisé en ce que l'on réalise ladite surface de révolution suivant une forme cylindrique dont une extrémité comporte un épaulement extérieur (24) s'appliquant contre une extrémité de la cartouche de distribution (14), sous l'effet du serrage d'un écrou (25) vissé sur la douille intermédiaire rotative (20) et s'appliquant contre l'autre extrémité de ladite cartouche, et en ce que l'on règle le débit de fuite par rotation de l'écrou (25) sur la douille.

**Claims**

1. Extruder head for fabricating a helicoidal element (1) of synthetic material, comprising a rotary die (30) provided with an axial orifice whose form corresponds to the transverse profile of the element to be fabricated, a mandrel rod (31 and 37) aligned with the die, an intermediate rotary sleeve (20), which is coupled to a rotary driving mechanism and inside which the die and the mandrel rod are centrally fixed, this sleeve being provided with channels (45) for passage of the synthetic material, and a distributing cartridge (14) fixedly mounted and provided with an axial bore (15), in which the intermediate sleeve is accomodated, and with distribution channels (16, 17) for distributing the synthetic material on the periphery of this sleeve, characterized in that the intermediate sleeve (20) comprises an outer cylindrical surface, adapted to slidingly revolve within the axial cylindrical bore (15) of the distributing cartridge (14), a peripheral shoulder (24) adapted to be applied to one extremity of this cartridge, and an adjusting nut (25) for exerting an adjustable thrust upon the other extremity of said cartridge.

2. Extruder head according to claim 1, characterized in that the distribution channel of said cartridge comprise two symmetrical lobes (16, 17), each extending over 180° around the intermediate sleeve, in that said intermediate sleeve (20) comprises, facing said distribution channels (16, 17) of the cartridge, a peripheral groove (44) which communicates with the interior of the sleeve through cross-channels (45) for passage of the synthetic material, in that said cross-channels (45) are separated from each other by tie pieces (46) whose faces situated facing the mandrel rod (31, 37) form, in transverse profile, acute angles (A) with the peripheral surface of the mandrel rod, and in that the mandrel rod comprises a peripheral groove (47) facing said cross-channels.

3. Extruder head according to claim 1, characterized in that the rotary driving mechanism (21) is disposed facing the rear extremety of the intermediate sleeve (20), that is, on the side opposed to the exit of the extruded product, and comprises radial pins (23) which are engaged in notches (22) provided in the rear extremity of said sleeve.

4. Extruder head according to claim 1, characterized in that the die (30) is slindingly mounted in the intermediate sleeve (20), in an axial position which is adjustable by means of an abutment nut (34) screwed to the intermediate sleeve.

5. Extruder head according to claim 4, characterized in that the die (30) comprises an outer cylindrical surface, and a rotary driving pin (32), which is engaged in a corresponding longitudinal groove (33) of the intermediate sleeve.

6. Extruder head according to claim 1, characterized in that the mandrel rod (31 and 37) comprises an outer cylindrical surface for centering in the intermediate sleeve (20) and a circular abutment shoulder (40), cooperating with a corresponding shoulder of the intermediate sleeve and in that a rear locking nut (41) is mounted in the intermediate sleeve, in the extension of the mandrel rod extremity which is opposed to the die, so as to lock the mandrel rod axially and in rotation by clamping of said shoulder.

7. Extruder head for fabricating an element of synthetic material of a first color having at least one helicoidal band of synthetic material of a second color, this head comprising a rotary die (30) provided with an axial orifice, whose form corresponds to the transverse profile of the element, a mandrel rod (31 and 37) aligned with the die, intermediate rotary sleeve (20), which is coupled to a rotary driving mechanism and inside which the die and the mandrel rod are centrally fixed, this sleeve being provided with cross-channels (45) for passage of the synthetic material, and a distributing cartridge (14) fixedly mounted and provided with an axial bore (15), in which the intermediate sleeve is accomodated, and with respective distribution channels (16, 17) for distributing the first and the second synthetic material on the periphery of this sleeve, characterized in that the intermediate sleeve (20) comprises an outer cylindrical surface adapted to slidingly revolve within the axial cylindrical bore (15) of the distributing cartridge (14), a peripheral shoulder (24) adapted to be applied to one extremity of this cartridge, and an adjusting nut (25) for exerting an adjustable thrust in the other direction, and in that the rotary die (30) is provided with at least one transverse channel (51) for feeding the material of the second color.

8. Process for lubricating an extruder head with a rotary die for extruding elements of thermoplastic synthetic material, said die (30) being fixed in an intermediate rotary sleeve (20) including an external surface of revolution for slidingly revolving in an axial bore (15) of a distributing cartridge (14) fixedly mounted in the extruder head, said cartridge (14) being provided with distribution channels (16, 17) for distributing the synthetic material under pressure on the periphery of the rotating sleeve (20) in a central portion of said surface of revolution and for thus feeding the die (30) by means of channels (45) provided through the rotating sleeve, characterized in that a leakage flow of the thermoplastic material is permitted along said surface of revolution, for lubricating said surface, and in that this leakage flow is controlled by axial clamping of two annular elements (24, 25) mounted on the intermediate rotary sleeve (20). and slidingly applied to the respective extremities of the distributing cartridge (14), the leakage flow escaping between said annular elements and the extremities of the cartridge.

9. Process according to claim 8, characterized in that said surface of revolution is made with a cylindrical form of which one extremity comprises an outer shoulder (24) applied to one extremity of the distributing cartridge (14) due to the clamping effect of a nut (25) screwed on the intermediate rotary sleeve (20) and applied to the other extremity of said cartridge, and in that the leakage flow is controlled by rotating the nut (25) on the sleeve.

**Patentansprüche**

1. Extruderkopf zur Herstellung eines schraubenförmigen Elementes (1) aus synthetischem Werkstoff, der folgendes aufweist : ein drenbares Mundstück (30), versehen mit einer axialen Öffnung, deren Form dem Querschnitt des zu fertigenden Elementes entspricht, einem mit dem Mundstück fluchtenden Stempel (31, 37), eine drehbare Zwischenbuchse (20), die mit einer Vorrichtung für Drehbewegung gekuppelt ist und in welcher das Mundstück und der Stempel zentrisch befestigt sind, wobei diese Buchse mit Durchlässen (45) für die synthetische Masse versehen ist, und eine stationär montierte, mit einer axialen Bohrung (15) versehene Verteilpatrone (14), in welcher die Zwischenbuchse untergebracht ist, sowie Verteilkanäle (16, 17) zum Verteilen der synthetischen Masse auf den Umfang dieser Buchse, dadurch gekennzeichnet, daß die Zwischenbuchse (20) eine zylindrische Außenfläche aufweist, damit sie sich gleitend im Inneren der zylindrischen axialen Bohrung (15) der Verteilpatrone (14) drehen kann, des weiteren einen peripheren Vorsprung (24), der sich gegen ein Ende dieser Patrone abstützt, und eine Stellmutter (25) um einen einstellbaren Schub gegen das andere Ende der Patrone zu ermöglichen.

2. Extruderkopf nach Anspruch 1, dadurch gekennzeichnet, daß die Verteilkanäle der Patrone zwei symmetrische lappenförmige Enden (16, 17) aufweisen, die sich jeweils auf 180 Grad um die Zwischenbuchse erstrecken, daß diese Zwischenbuchse (20) gegenüber den Verteilkanälen (16, 17) der Patrone eine Umfangsrille (44) aufweist, welche über Durchgangskanäle (45) für die synthetische Masse mit dem Inneren der Buchse in Verbindung steht, daß diese Durchgangskanäle (45) voneinander durch Stege (46) getrennt sind, deren dem Stempel (31, 37) gegenüberliegenden Flächen im Querschnitt spitze Winkel (A) mit der peripheren Fläche des Stempels bilden, und daß der Stempel, den Durchgangskanälen gegenüberliegend, eine Umfangsrille (47) aufweist.

3. Extruderkopf nach Anspruch 1, dadurch gekennzeichnet, daß die Vorrichtung für die Drenbewegung (21) dem hinteren Ende der Zwischenbuchse (20) gegenüberstehend angeordnet ist, d. h. an der dem Austritt des extrudierten Erzeugnisses entgegengesetzten Seite, und Radialstifte (23) aufweist, die in Nuten (22) eingreifen, welche am hinteren Ende der Buchse angebracht sind.

4. Extruderkopf nach Anspruch 1, dadurch gekennzeichnet, daß das Mundstück (30) in der Zwischenbuchse (20) verschiebbar in einer axialen Stellung montiert ist, die mittels einer auf die Zwischenbuchse geschraubten Anschlagmutter (34) einstellbar ist.

5. Extruderkopf nach Anspruch 4, dadurch gekennzeichnet, daß das Mundstück (30) eine zylindrische Außenfläche aufweist und einen Mitnehmerstift (32) für die Rotation, welcher in eine entsprechende Längsnut (33) in der Zwischenbuchse eingreift.

6. Extruderkopf nach Anspruch 1, dadurch gekennzeichnet, daß der Stempel (31, 37) eine zylindrische Außenfläche zur Zentrierung in der Zwischenbuchse (20) aufweist, und einen kreisförmigen Vorsprung (40) als Anschlag, der sich an einen entsprechenden Rücksprung der Zwischenbuchse anlegt und daß eine hintere Klemmschraube (41) in der Verlängerung des dem Mundstück entgegengesetzten Endes des Stempels in der Zwischenbuchse eingebaut ist, um durch Verspannen dieses Vor- bzw. Rücksprunges den Stempel axial und gegen Verdrehen zu fixieren.

7. Extruderkopf zur Herstellung eines Elementes aus synthetischem Werkstoff in einer ersten Farbe, das mindestens ein schraubenförmiges Band aus synthetischem Werkstoff in einer zweiten Farbe aufweist, wobei dieser Kopf ein drehbares Mundstück (30) aufweist, versehen mit einer axialen Öffnung, deren Form dem Querschnitt des Elementes entspricht, außerdem einen mit dem Mundstück fluchtenden Stempel (31, 37), eine drehbare Zwischenbuchse (20), die an eine Vorrichtung für Drehbewegung gekuppelt ist und in welcher das Mundstück und der Stempel zentrisch befestigt sind, wobei diese Buchse mit Durchlässen (45) für die synthetische Masse versehen ist, und eine stationär montierte, mit einer axialen Bohrung (15) versehene Verteilpatrone (14), in welcher die Zwischenbuchse gelagert ist, und entsprechende Verteilkanäle (16, 17) um die erste und die zweite synthetische Masse auf den Umfang dieser Buchse zu verteilen, dadurch gekennzeichnet, daß die Zwischenbuchse (20) eine zylindrische Außenfläche aufweist, um sich gleitend im Inneren der axialen zylindrischen Bohrung (15) der Verteilpatrone (14) zu drehen, des weiteren einen peripheren Vorsprung (24) der sich gegen ein Ende dieser Patrone abstützt, und eine Stellschraube (25) um einen einstellbaren Schub in die andere Richtung zu ermöglichen, und daß das drehbare Mundstück (30) mit mindestens einem Querkanal (51) zum Zuführen der Masse in der zweiten Farbe versehen ist.

8. Verfahren zur Schmierung eines Extruderkopfes mit drehbarem Mundstück zur Extrusion von Elementen aus synethischem thermoplastischem Werkstoff, wobei das Mundstück (30) in einer drehbaren Zwischenbuchse (20) befestigt ist, welche außen eine Rotationsfläche aufweist, um sich gleitend in einer Axialbohrung (15) einer Verteilpatrone (14) zu drehen, die ihrerseits stationär im Extruderkopf montiert ist, wobei die Patrone (14) mit Verteilkanälen (16, 17) versehen ist, damit sich die synthetische Masse unter Druck in einem zentralen Teil der Rotationsfläche auf dem Umfang der drehbaren Buchse (20) verteilt und um so das Mundstück (30) dank der durch die drehbare Buchse hindurchgeführten Kanäle (45) zu versorgen, dadurch gekennzeichnet, daß man entlang der Rotationsfläche eine Leckmenge an thermoplastischer Masse zuläßt, um diese Fläche zu schmieren und daß man diese Leckmenge durch axiales Verspannen von zwei auf der drehbaren Zwischenbuchse (20) montierten ringförmigen Elementen (25, 26) einstellt, die sich gleitend gegen die entsprechenden Enden der Verteilpatrone (14) abstützen, wobei die Leckmenge zwischen den ringförmigen Elementen und den Patronenenden entweicht.

9. Verfahren nach Anspruch 8, dadurch gekennzeichnet, daß man die Rotationsfläche zylindrisch ausführt und ein Ende einen äußeren Vorsprung (24) aufweist, der sich gegen ein Ende der Verteilpatrone (14) abstützt infolge des Anziehens einer auf die drehbare Zwischenbuchse (20) geschraubten und sich gegen das andere Ende der Patrone abstützenden Mutter (25), und daß man die Leckmenge durch Drehen der Mutter (25) auf der Buchse einstellt.

Fig. 1

Fig. 2

Fig. 3